# EUROPEAN PATENT APPLICATION

(11) **EP 1 199 658 A2**
(43) Date of publication of application: **24.04.2002**
(21) Application number: 01123601.5
(22) Date of filing: 01.10.2001
(51) Int. Cl.: G06F 17/60

(54) **Market research system, merchandise information evaluation system and e-commerce system provided therewith**

(30) Priority: 02.10.2000 JP 2000302712
(71) Applicant: MATSUSHITA ELECTRIC INDUSTRIAL CO., LTD., Kadoma-shi, Osaka 571-8501 (JP)
(72) Inventor: Kindo, Toshiki, Yokohama-shi, Kanagawa 227-0044 (JP); Shida, Takehiko, Yokohama-shi, Kanagawa 244-0813 (JP); Yoshida, Hideyuki, Sagamihara-shi, Kanagawa 228-0801 (JP)
(74) Representative: Grünecker, Kinkeldey, Stockmair & Schwanhäusser Anwaltssozietät

(57) **Abstract**

Search signal generating section 317 generates a search signal using a keyword contained in merchandise information on merchandise subject to market research requested from a seller. Search signal distribution section 318 distributes the search signal to consumer terminal 103 provided with a personal profile with which various keywords contained in the merchandise information and evaluation values corresponding to the keywords are registered, where the evaluation values are learned in advance based on a preference of a consumer. Reply signal processing section 319 receives from consumer terminal 103 a reply signal obtained from an evaluation value in the personal profile corresponding to the keyword contained in the search signal.

## Description

### BACKGROUND OF THE INVENTION

### Field of the Invention

The present inventor relates to a market research system, merchandise information evaluation system and e-commerce system provided with the market research system or merchandise information evaluation system each utilizing information communication networks using electronic, radio and/or optical system as media. More particularly, the present invention relates to a market research system for performing market research on merchandise information provided by sellers, merchandise information evaluation system for recognizing consumer evaluations on the merchandise information provided by sellers, and e-commerce system provided with the market research system or merchandise information evaluation system.

### Description of the Related Art

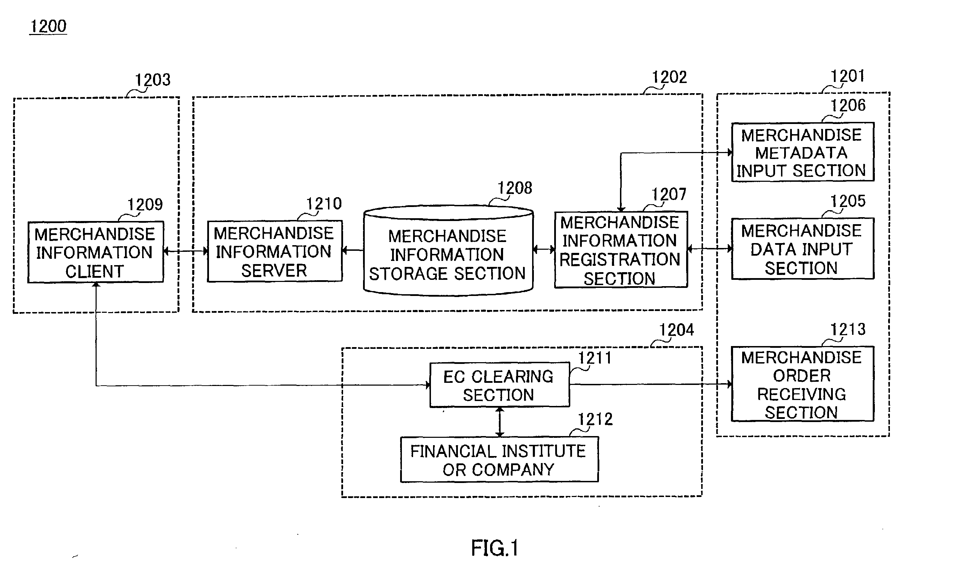

FIG.1 illustrates a configuration example of conventionale-commercesystems. E-commerce system 1200 illustrated in FIG.1 is comprised of seller terminal 1201 for use in issuing merchandise information, merchandise information distribution unit 1202 that distributes the merchandise information, consumer terminal 1203 for use in watching the merchandise information and placing an order for the merchandise, and electronic clearing unit 1204 that completes the transaction on the merchandise.

In conventional e-commerce system 1200 configured in this way, a seller inputs merchandise data I (for example, merchandise ID, text and photograph) from merchandise data input section 1205, and further inputs merchandise metadata MI (for example, when the merchandise is wine, a kind of wine, a breed of grape, production place, etc.) indicative of characteristics of the merchandise from merchandise metadata input section 1206. Merchandise information registration section 1207 registers the merchandise data I and merchandise metadata MI (hereinafter referred to as "merchandise information") with merchandise information storage section 1208.

A consumer uses merchandise information client 1209 (such as an internet browser installed in a personal computer) connected to networks to access to merchandise information server 1210, and searches for a desired piece of merchandise. In the case where this search is of keyword search, the merchandise data I and merchandise metadata MI is used. When the consumer finds the desired piece of merchandise, the consumer transmits a merchandise ordering signal including at least consumer ID and merchandise ID to EC clearing section 1211 through merchandise information client 1209.

EC clearing section 1211 inquires of financial institute or company 1212 whether the consumer as an orderer has an ability to pay for the order. When the consumer has the ability to pay, the section 1211 returns a signal indicative of the order acknowledgment to merchandise information client 1209. Further, the section 1211 transmits an order receiving signal including the consumer ID of the orderer and the merchandise ID to merchandise order receiving section 1213 of the seller.

The seller ships the merchandise designated by the merchandise ID to the consumer indicated by the consumer ID, while transmitting a merchandise shipment signal to EC clearing section 1211. EC clearing section 1211 clears the payment on the merchandise using accounts of the consumer and of the seller with a predetermined commission after a predetermined period of time during which there is no signal from the consumer indicating that the shipment has not arrived. The e-commerce is thus carried out.

In this way, conventional e-commerce system 1200 distributes the merchandise information input by sellers to consumers. Meanwhile, a consumer places an order with the merchandise while watching the presented merchandise information. In order to improve the benefit when a consumer searches for a desired piece of merchandise, the merchandise information input by sellers is capable of including merchandise metadata MI indicative of characteristics of the merchandise. However, there has been no method for studying the correlation between the contents of the input merchandise metadata MI and the sales of the merchandise, and therefore the sellers have not been able to judge the correlation. As a result, the sellers have not recognized what kind of merchandise metadata MI consumers desire, and have not used the merchandise metadata actively. That causes problems with consumers such that the consumers are not capable of obtaining useful merchandise information in searching the merchandise.

In other words, it is a current state that motivations and desires of sellers only keep the merchandise information quality and distribution on networks. It is also a current state that the sellers are not capable of judging effectiveness resulting from an increased quality of the merchandise information. These states do not improve the quality of the merchandise information presented by the sellers to consumers. Further, it is made difficult for a consumer to search for the desired merchandise on networks. As a result, there arises a problem that disadvantages occur in expanding the e-commerce.

### SUMMARY OF THE INVENTION

It is an object of the present invention to provide an e-commerce system and method capable of recognizing consumer evaluations on the merchandise provided by sellers, thereby improving the merchandise information, and presenting useful merchandise information to consumers.

Namely, the e-commerce system of the present invention generates a search signal using keywords contained in the merchandise information on a piece of merchandise subject to the market research requested from a seller, provides the search signal to a reply apparatus that stores a personal profile in which various keywords contained in the merchandise information are related to respective evaluation values which are learned in advance based on consumer preferences, and receives from the reply apparatus a reply signal obtained from the evaluation values in the personal profile corresponding to the keywords contained in the search signal.

It is thereby possible to recognize the evaluation values corresponding to the keywords contained in the search signal, whereby it is possible to recognize the consumer evaluations on the merchandise information assigned to the piece of merchandise subject to the market search. Then by improving the merchandise information corresponding to the consumer evaluations, it is possible to present the useful merchandise information to the consumers.

### BRIEF DESCRIPTION OF THE DRAWINGS

The above and other objects and features of the invention will appear more fully hereinafter from a consideration of the following description taken in connection with the accompanying drawing wherein one example is illustrated by way of example, in which;
FIG.1 is a block diagram illustrating a configuration of a conventional e-commerce system;
FIG.2 is a block diagram illustrating a configuration of an e-commerce system according to a first embodiment of the present invention;
FIG. 3 is a block diagram illustrating the e-commerce system connected through networks according to the first embodiment;
FIG.4 is a block diagram illustrating a specific configuration of the e-commerce system according to the first embodiment;
FIG.5 is a block diagram illustrating a specific configuration to indicate the relationship between an information filtering section and a PPF storage section in a consumer terminal in the e-commerce system according to the first embodiment;
FIG.6 is a table showing an example of data in a code dictionary storage section in the information filtering section in the e-commerce system according to the first embodiment;
FIG.7 is a table showing examples of scores assigned to the example illustrated in FIG.6;
FIG.8 is a table showing an example of the merchandise information ranked in the merchandise information storage section in the information filtering section in the e-commerce system according to the first embodiment;
FIG.9 is a diagram illustrating an example of a learning and ordering screen generated by a merchandise information output control section in the information filtering section in the e-commerce system according to the first embodiment;
FIG.10 is a block diagram illustrating a specific configuration to indicate the relationship between a customer reply section and the PPF storage section in the consumer terminal in the e-commerce system according to the first embodiment;
FIG.11 is a block diagram illustrating a specific configuration of an e-commerce system according to a second embodiment of the present invention; and
FIG.12 is a block diagram illustrating a specific configuration of an e-commerce system according to a third embodiment of the present invention.

### DETAILED DESCRIPTION OF THE PREFERRED EMBODIMENTS

Embodiments of an e-commerce system of the present invention will be described below with reference to accompanying drawings.

### (First embodiment)

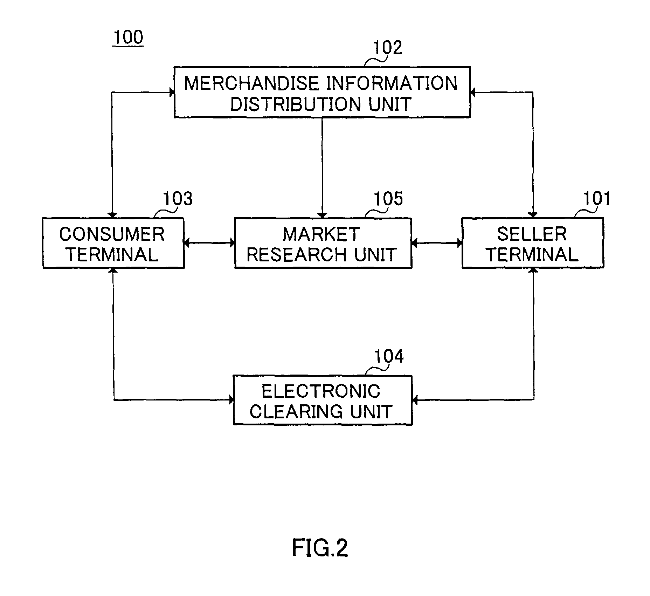

FIG.2 is a block diagram illustrating a configuration of e-commerce system (hereinafter referred to as "EC system") 100 that functions as a market research system and merchandise evaluation system according to the first embodiment of the present invention.

As illustrated in FIG.2, EC system 100 is comprised of seller terminal 101 for use in issuing merchandise information and placing an order for the market research, merchandise information distribution unit 102 that distributes the merchandise information, consumer terminal 103 for use in watching the merchandise information and placing an order for the merchandise, electronic clearing unit 104 that clears the transaction on the merchandise and market research unit 105 that performs the market research.

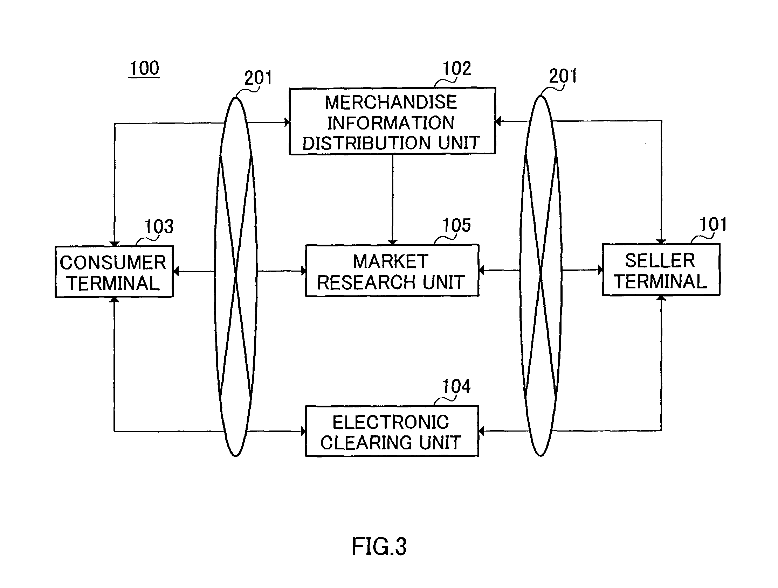

In addition, EC system 100 is actually constructed, as illustrated in FIG.3, while seller terminal 101 and consumer terminal 103 are connected with merchandise information distribution unit 102, electronic clearing unit 104 and market research unit 105 provided in, for example, a distributor over networks 201 such as the internet. It may be also possible that the distributor is provided with only merchandise information distribution unit 102 and market research unit 105, and that electronic clearing unit 104 is committed to an external financial institute or the like.

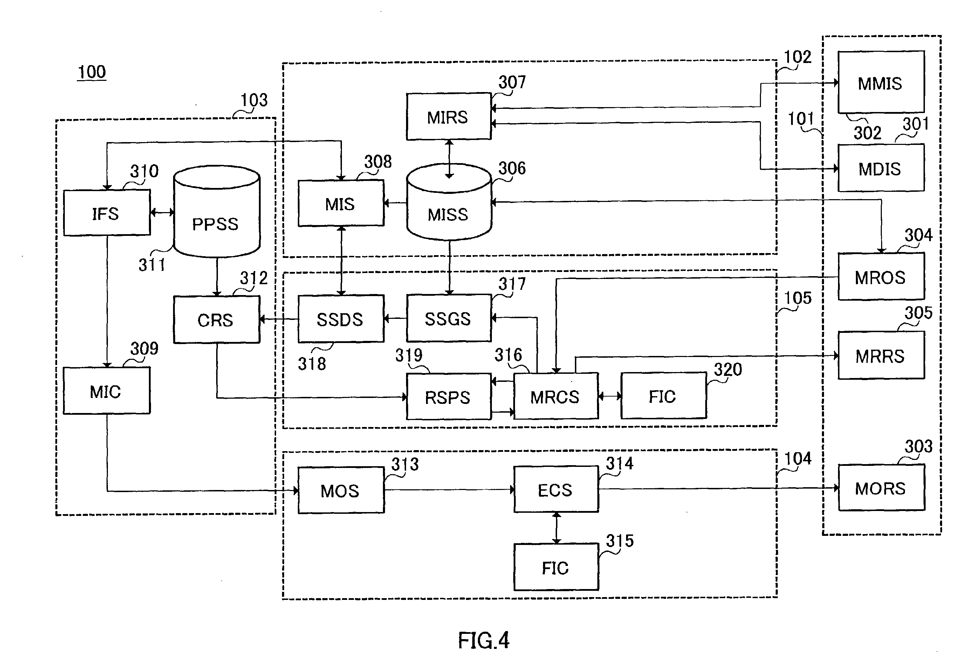

A specific configuration of EC system 100 will be described with reference to FIG.4. FIG.4 is a block diagram illustrating the specific configuration of EC system 100 according to this embodiment.

In EC system 100 illustrated in FIG.4, seller terminal 101 is provided with merchandise data input section (MDIS) 301 that inputs merchandise data I to merchandise information distribution unit 102, merchandise metadata input section(MMIS) 302 that inputs merchandise metadata MI to merchandise information distribution unit 102, and merchandise order receiving section(MORS) 303 that receives an order receiving signal including the consumer ID of an orderer and merchandise ID from electronic clearing unit 104.

Meanwhile, seller terminal 101 is provided with market research ordering section(MROS) 304 and market research receiving section(MRRS) 305. Market research ordering section 304 generates a specification signal for designating the specification such as a scale of market research on the merchandise selected by a seller. Transmitting the specification signal places an order with market research unit 105 for the market research. Market research receiving section 305 receives a market research report signal transmitted from market research unit 105. The market research report signal will be described later.

Merchandise information distribution unit 102 is provided with merchandise information storage section(MISS) 306 that stores the merchandise information input from seller terminal 101, merchandise information registration section(MIRS) 307 that registers the merchandise information with merchandise information storage section 306, and merchandise information server(MIS) 308 that distributes the desired merchandise information to consumer terminal 103 in response to an access from consumer terminal 103. In addition, market research ordering section 304 of seller terminal 101 reads out information on the merchandise to be researched and others from merchandise information storage section 306 in generating the specification signal.

Consumer terminal 103 is provided with merchandise information client(MIC) 309 that accesses to merchandise information server 308 to search the merchandise information, while based on the search result, transmitting the merchandise ordering signal to electronic clearing unit 104. Consumer terminal 103 is further provided with information filtering section (IFS) 310, personal profile storage section(PPSS) 311 and customer reply section(CRS) 312.

Information filtering section 310 generates the personal profile (hereinafter referred to as "PPF") reflective of consumer preferences using the merchandise information distributed from merchandise information server 308 and inputs of the consumer. PPF generated in information filtering section 301 is stored in personal profile storage section 311 (hereinafter referred to as "PPF storage section 311"). Since PPF is thus managed in consumer terminal 103, it is possible to prevent the data reflective of consumer preferences from flowing out , whereby it is possible to protect the privacy of the consumer.

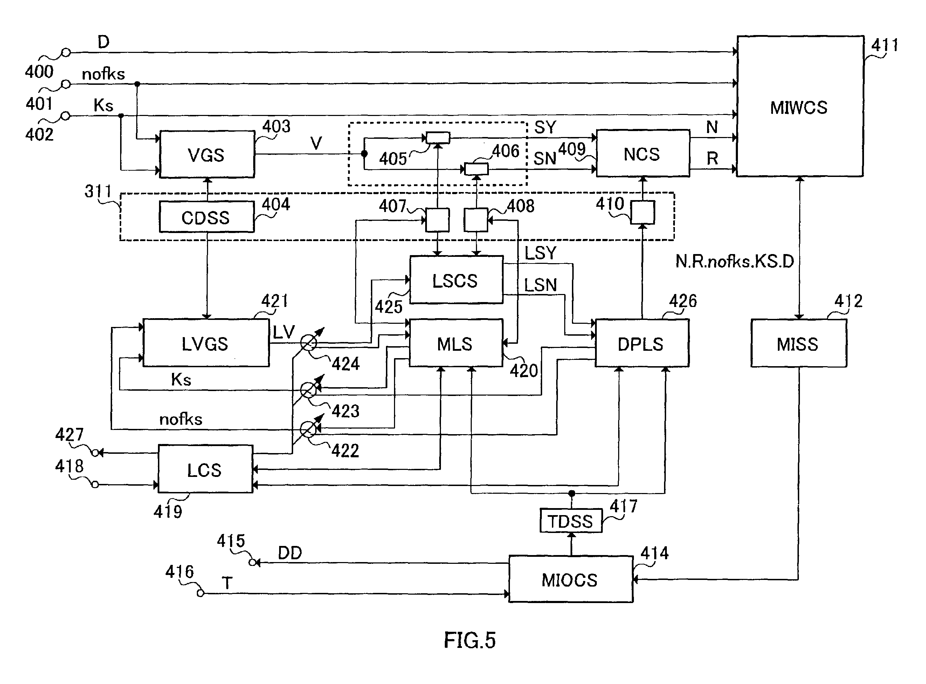

With reference to FIG.5, the relationship between information filtering section 310 and PPF storage section 311 will be described. FIG.5 is a block diagram illustrating a specific configuration with respect to the relationship between information filtering section 310 and PPF storage section 311.

Information filtering section 310 is associated with PPF storage section 311 in two kinds of processing, i.e. , filtering processing for filtering the merchandise information and learning processing for learning the merchandise information. The filtering processing is such processing that rearranges pieces of the merchandise information distributed from merchandise information server 308 according to PPF reflective of consumer preference. The learning processing is such processing that learns PPF for use in performing the filtering processing. In addition, the learning processing is further performed, for example, in placing an order for the merchandise information.

The filtering processing on the merchandise information in information filtering section 310 will be described.

When a consumer accesses to merchandise information server 308 to search the merchandise information and receives the merchandise information distributed from the server 308, as illustrated in FIG.5, input to information data input terminal 400 is the merchandise information comprised of merchandise data I and merchandise metadata MI to be evaluated, input to number-of-keyword signal input terminal 401 is a number-of-keyword signal nofks indicative of the number of keywords contained in the merchandise information, and input to keyword signal input terminal 402 is keyword group signal Ks comprised of a plurality of keywords. The keyword group signal Ks is comprised of keywords contained in the merchandise information.

Vector generating section(VGS) 403 transforms the keyword group signal Ks from character sequences to a vector signal V. In order to transform the character sequences to the vector signal V, a character sequence is employed of a code dictionary signal stored in code dictionary storage section(CDSS) 404.

Code dictionary storage section 404 stores character sequences of keywords of various merchandise in the form of code dictionary signals. When the same character sequence as a character sequence of a jth code dictionary signal is detected from the keyword group signal Ks, "1" is input to a jth vector component of the vector signal V. When the same character sequence as the character sequence of the jth code dictionary signal is not detected, "0" is input to the jth vector component of the vector signal V. Similar processing is repeated with respect to all the components of the vector signal V.

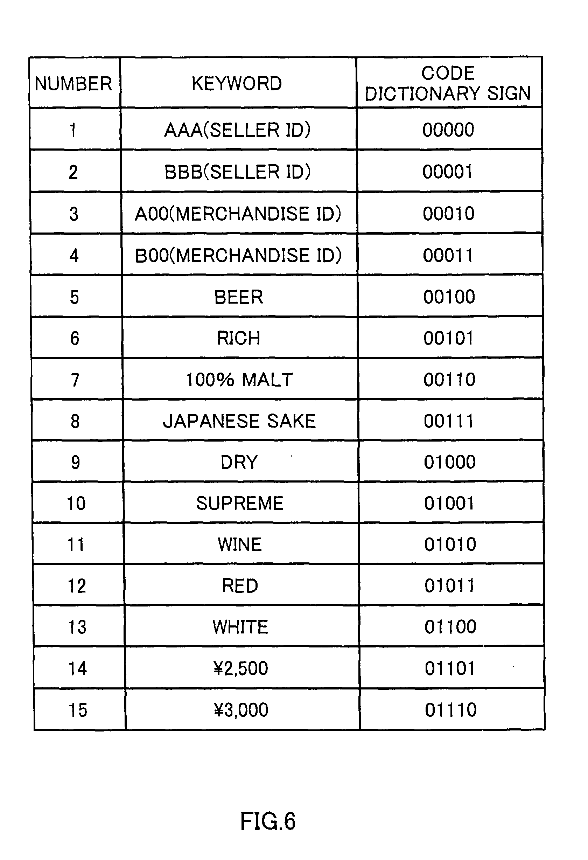

The keywords for "liquors" will be specifically described as one of examples. In code dictionary storage section 404 are stored character sequences such as "beer", "rich", "100% malt", "Japanese sake", "dry", "supreme, "wine", "red", "white", "¥2,500" and "¥3,500" in addition to the seller ID and merchandise ID. FIG.6 is a table showing an example of data in code dictionary storage section 404 that stores character sequences of these keywords.

Positive signal calculating section 405 calculates a positive signal SY such that a value thereof is large when the keyword group signal Ks contains a large number of keywords such that the consumer previously replied the keyword interested the consumer. Positive signal calculating section 405 performs the calculation using a positive metric signal stored in positive metric storage section 407. Negative signal calculating section 406 calculates a negative signal SN such that a value thereof is large when the keyword group signal Ks contains a large number of keywords such that the consumer previously replied that the keyword did not interest the consumer. Negative signal calculating section 406 performs the calculation using a negative metric signal stored in negative metric storage section 408.

The positive metric signal is determined based on the keyword group signal Ks and a result of the reply indicative of that the consumer has an interest. The negative metric signal is determined based on the keyword group signal Ks and a result of the replay indicative of that the consumer has no interest. The positive metric signal and negative metric signal each are assigned a value (hereinafter referred to as "score" ) corresponding to presence or absence of consumer's interest in relation to each keyword. Assuming, in the above-mentioned specific example, that the consumer previously replied having an interest in the merchandise information containing "beer" that is the keyword, the score corresponding to the number of times having an interest was replied is assigned to "beer". Further assuming a simple example such that having an interest was replied four times, the score of 4 (positive) is assigned to "beer". In contrast thereto, when the consumer previously replied having no interest, the score corresponding to the number of times having no interest was replied is assigned to "beer".

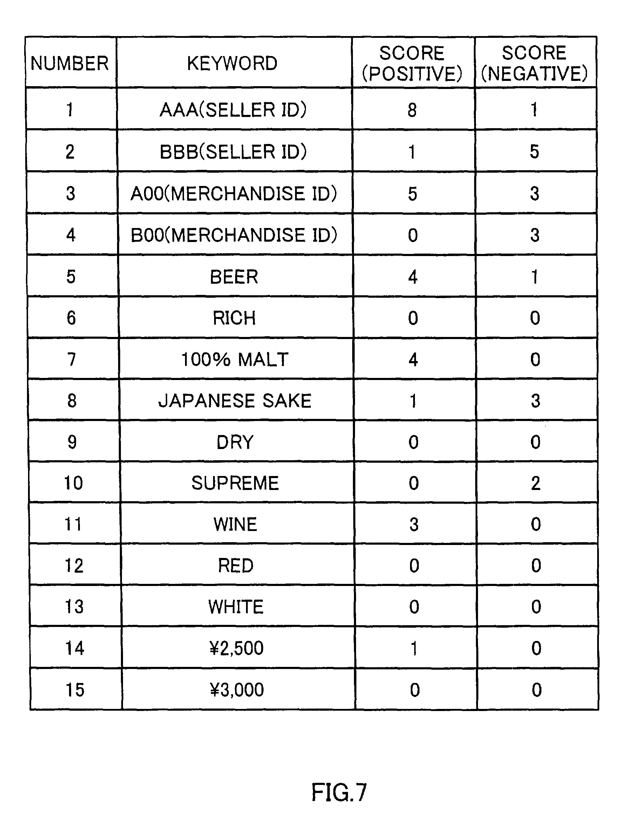

FIG.7 is a table showing examples of scores assigned to the specific example in FIG.6. The positive signal SY and negative signal SN are obtained by calculating scores assigned corresponding to respective keywords.

Using the positive signal SY and negative signal SN, necessity calculating section(NCS) 409 calculates a necessity signal N according to an equation of N=SY-C ^{.} SN and further calculates a reliability signal R according to another equation of R=C · SY+SN. The coefficient C is used to separate the merchandise information into pieces of the information that interested the consumer and pieces of the information that did not interest the consumer, and is provided from determination parameter storage section 410. The necessity signal N and reliability signal R have a large value when there are a large number of keywords contained in the merchandise information such that the consumer previously replied having an interest therein, and there are few keywords contained in the merchandise information such that the consumer previously replied having no interest therein.

PPF storage section 311 is comprised of code dictionary storage section 404, positive metric storage section 407, negative metric storage section 408, and determination parameter storage section 410 described above. In addition, various data to be stored in code dictionary storage section 404, positive metric storage section 407, negative metric storage section 408, and determination parameter storage section 410 is stored in the learning processing described later. It is herein assumed that appropriate data subjected to the learning processing is already stored in the above sections.

Merchandise information write control section(MIWCS) 411 ranks the evaluated pieces of the merchandise information in merchandise information storage section(MISS) 412. In merchandise information storage section 412 are arranged and stored the pieces of the merchandise information in descending order of a value of the necessity signal N.

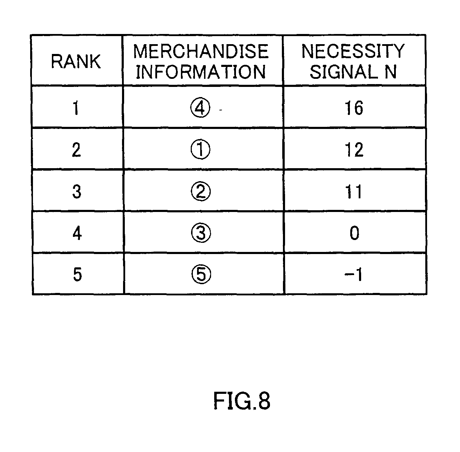

FIG.8 is a table showing an example of pieces of the merchandise information ranked in merchandise information storage 412 after learning preferences on liquors of a person. FIG.8 illustrates a case of using the merchandise information pieces containing keywords described below shown in FIGs.6 and 7, where the coefficient C is "1":
Merchandise information ① : AAA (seller ID), A00 (merchandise ID), beer and rich;
Merchandise information ②: AAA (seller ID), wine and ¥2,500;
Merchandise information ③: BBB (seller ID), wine and ¥2,500;
Merchandise information ④ : AAA (seller ID), A00 (merchandise ID), beer and 100% malt; and
Merchandise information ⑤: BBB (seller ID), wine and ¥3,000.

In this case, in merchandise information storage section 412 are stored the merchandise information pieces in the order as shown in FIG. 8. In other words, according to the equation of the necessity signal described previously, necessity signals N are calculated as follows:
Merchandise information ④ : {8+5+4+4}(SY)-{1}(C) · {1+3+1+0}(SN)=16(N);
Merchandise information ① : {8+5+4+0}(SY)-{1}(C) · {1+3+1+0}(SN)=12(N);
Merchandise information ② : {8+3+1}(SY)-{1}(C) · {1+0+0}(SN)=11(N);
Merchandise information ③ : {1+3+1}(SY)-{1}(C) · {5+0+0} (SN)=0(N); and
Merchandise information ⑤ : {1+3+0}(SY)-{1}(C) · {5+0+0}(SN)=-1(N).

Therefore, the merchandise information pieces ① to ⑤ are ranked and stored as shown in FIG.8.

Merchandise information output control section(MIOCS) 414 uses the merchandise information pieces ranked and stored in merchandise information storage section 412 to generate a predetermined learning and ordering screen, and transfers the screen to merchandise information client 309 through merchandise information output terminal 415. In addition, the learning and ordering screen will be described later along with the learning processing.

Information filtering section 310 thus performs the filtering processing on the merchandise information pieces distributed from merchandise information server 308. It is thereby possible for a consumer to watch the merchandise information pieces ranked according to previous inputs of the consumer indicative of interests or no interests thereof, using a display or the like of merchandise information client 309 without performing particular processing. As a result, the consumer is capable of placing an order for merchandise based on the merchandise information pieces ranked according to the preferences of the consumer.

The learning processing in information filtering section 310 will be described below. A preferable example of information filtering section 310 is an information filtering apparatus disclosed in Japanese Laid-open Patent Publication HEI9-288683. In order to simplify the explanation, the simplest configuration is herein used to explain.

When information filtering section 310 receives a learning request from a consumer through merchandise information client 309, the section 310 accesses to merchandise information server 308 to request the distribution of the merchandise information according to search conditions and the like contained in the learning request. Information filtering section 310 receives the merchandise information distributed from merchandise information server 308 in response to the distribution request.

The learning processing is such processing that learns PPF indicative of preferences of a consumer by analyzing keywords contained in the merchandise information, where the consumer inputs whether or not he/she has an interest in the merchandise information distributed from merchandise information server 308. By performing the learning processing, PPF is stored in positive metric storage section 407 and negative metric storage section 408.

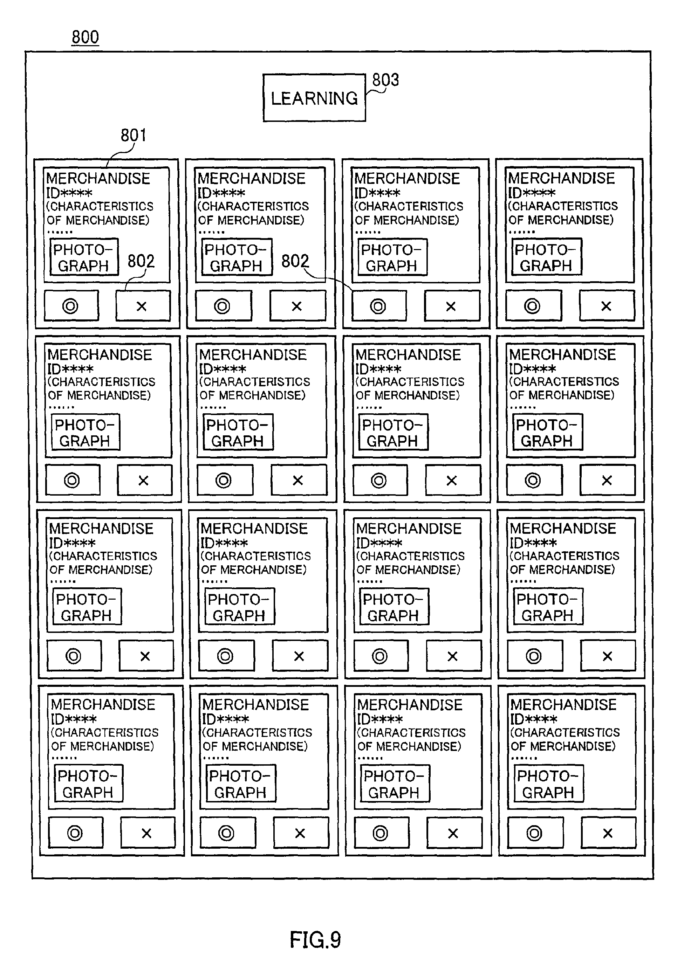

When the learning processing has been already performed, information filtering section 310 ranks the distributed merchandise information pieces in the same way as in the filtering processing described above according to the stored PPF, and generates learning and ordering screen 800 as illustrated in FIG.9. PPF is further updated according to a learning instruction of a consumer through learning and ordering screen 800. An ordering instruction input through learning and ordering screen 800 is also subject to the learning processing on PPF.

In the step where the learning processing is not performed, PPF is not stored in positive metric storage section 407 and negative metric storage section 408. Accordingly, since it is not possible to perform the above processing, merchandise information pieces are written in merchandise information storage section 412 without being ranked. Merchandise information output control section 414 generates learning and ordering screen 800 illustrated in FIG.9 using a plurality of merchandise information pieces written in merchandise information storage section 412. This learning and ordering screen 800 is transferred to merchandise information client 309 through merchandise information output terminal 415.

As illustrated in FIG.9, learning and ordering screen 800 is comprised of a plurality of merchandise information pieces 801, buttons 802 (shown with "ⓞ" and "×") for use in inputting "yes" or "no" as to whether a consumer is interested in each merchandise information piece, and learning button 803. In addition, selecting a merchandise information piece places an order for the piece of the merchandise. When learning and ordering screen 800 is displayed on the display or the like of merchandise information client 309, the consumer examines the contents of merchandise information pieces 801 and inputs having an interest or no interest. Then, selecting learning button 803 after finishing the input on the interests transmits the learning instruction to information filtering section 310. Information filtering section 310 receives the learning instruction through learning data input terminal 416.

The learning instruction contains a teaching signal T to each merchandise information. The teaching signal T is a signal indicative of an interest or no interest of a consumer in each merchandise information. When information filtering section 310 receives the learning instruction, the section 310 fetches the teaching signal T transmitted along with the learning instruction. The teaching signal T is stored in teaching data storage section(TDSS) 417 through merchandise information output control section 414. Each teaching signal T is stored in teaching data storage section 417 along with the keyword group signal Ks and number-of-keyword signal nofKs assigned to each merchandise information.

After the teaching signal T and the others are stored in teaching data storage section 417, a learning start signal is input to learning start signal input terminal 418. When the learning start signal is input, learning control section(LCS) 419 makes switches 422, 423 and 424 made to connect metric learning section(MLS) 420 and learning vector generating section(LVGS) 421.

Metric learning section 420 fetches the teaching signal T, keyword group signal Ks and number-of-keyword signal nofKs from teaching data storage section 417, and inputs the keyword group signal Ks and number-of-keyword signal nofKs to learning vector generating section 421.

Learning vector generating section 421 transforms the keyword group signal Ks to a learning vector signal LV using the code dictionary signal as well as vector generating section 403. Metric learning section 420 corrects the positive metric signal in positive metric storage section 407 based on the learning vector signal LV corresponding to the teaching signal T indicative of having an interest, while correcting the negative metric signal in negative metric storage section 408 based on the learning vector signal LV corresponding to the teaching signal T indicative of having no interest.

The positive metric signal thereby has a large value with respect to the keywords included in the merchandise information that interests the consumer. Similarly, the negative metric signal thereby has a large value with respect to the keywords included in the merchandise information that does not interest the consumer.

Learning score calculating section(LSCS) 425 calculates, in a similar way to that in positive signal calculating section 405 and negative signal calculating section 406, a learning positive signal LSY and a learning negative signal LSN from the learning vector signal LV. Using the learning positive signal LSY and learning negative signal LSN, determination plane learning section(DPLS) 426 obtains the coefficient C that most accurately separates merchandise information pieces that interest the consumer and that do not interest the consumer . The coefficient C is expressed on a two-dimensional space using the positive signal SY and negative signal SN. The obtained coefficient C is stored in determination parameter storage section 410. When the learning is finished, learning control section 419 outputs a learning finish signal from learning finish signal output terminal 427.

After confirming that the learning finish signal is output, merchandise information write control section 411 inputs again each piece of merchandise information, and the keyword group signal Ks and number-of-keyword signal nofks each assigned to the piece of merchandise information stored in merchandise information storage section 412 to respective input terminals 400, 401 and 402. As a result, with respect to each piece of merchandise information, the necessity signal N which is accurately reflective of interests (preference and taste) of the consumer is calculated based on the keywords assigned to the merchandise information. The merchandise information pieces are rearranged in descending order of the necessity signal, and the rearranged merchandise information pieces are stored again in merchandise information storage section 412. Using the merchandise information pieces rearranged in descending order of the necessity signal N, merchandise information output control section 414 generates learning and ordering screen 800 with the merchandise information pieces rearranged in descending order of the necessity signal N. The section 414 transfers the generated screen to merchandise information client 309, and learning and ordering screen 800 is displayed again. The consumer inputs a preference again when necessary, and thereby searches the merchandise information matching with the consumer's preferences.

Information filtering section 310 thus performs the learning processing, whereby the consumer is capable of obtaining PPF matching with the consumer's preferences only by inputting "yes" or "no" on the preferences.

The information filtering on the merchandise information is thus performed using PPF reflective of consumer preferences, whereby it is possible to automatically decrease the evaluation on the merchandise information distributed from malicious sellers.

For example, a case is considered that in order to increase a search hit rate of its own merchandise, a malicious seller inputs merchandise information that is not directly associated with the merchandise. In this case, when a consumer inputs "no interest" in such merchandise information, the merchandise information containing the seller ID indicative of such a seller is assigned a negative score in PPF. It is thereby possible to automatically decrease the evaluation on the merchandise information distributed from such a seller. In other words, it is possible to provide an EC system such that consumers are capable of supervising distributed merchandise information, and to automatically increase the evaluations on sellers that distribute good merchandise information.

In addition, it is preferable to generate PPF as described above using the merchandise information distributed from merchandise information server 308 and the teaching signal T reflective of consumer preferences. However, the present invention is not limited to the foregoing, as long as consumer preferences are reflected. For example, it may be possible to generate PPF using only consumer preferences input according to a menu displayed on an internet browser.

With reference to FIG.4 again, the description on the configuration of consumer terminal 103 is continued. Customer reply section 312 calculates the reply signal reflective of an extent of the consumer preference based on PPF stored in PPF storage section 311 and the search signal provided from market research unit 105.

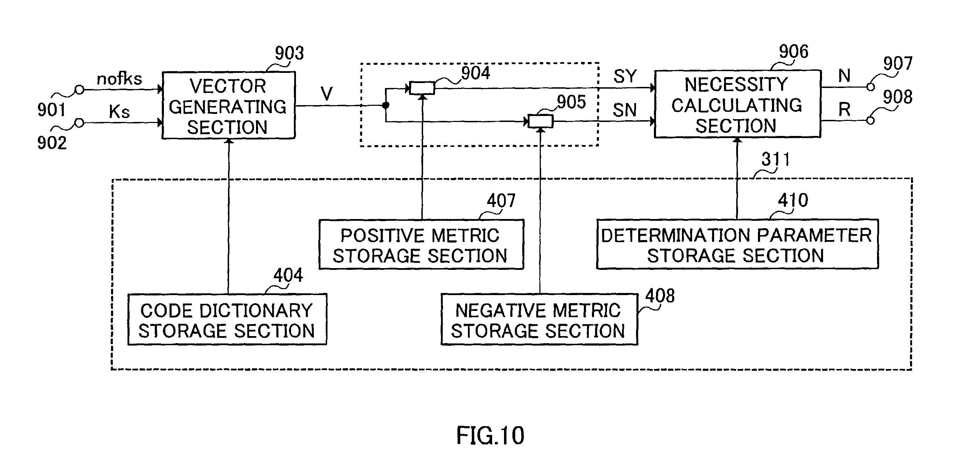

The relationship between customer reply section 312 and PPF storage section 311 will be described below with reference to FIG.10. FIG.10 is a block diagram illustrating the specific configuration indicating the relationship between customer reply section 312 and PPF storage section 311.

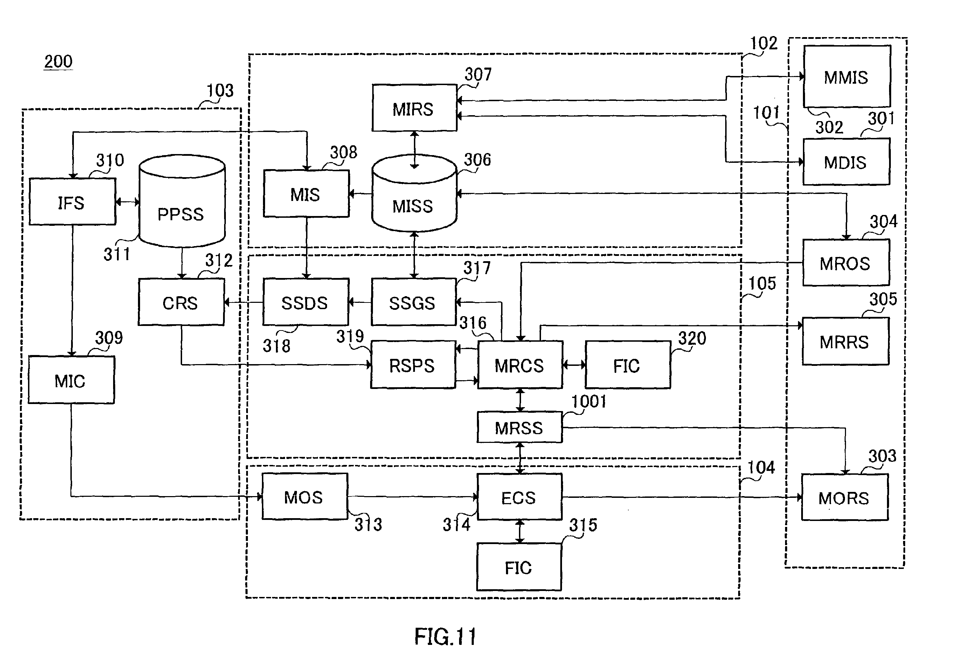

When customer reply section 312 calculates the reply signal, the number-of-keyword signal nofKs indicative of the number of keywords contained in the search signal described later is input to number-of-keyword signal input terminal 901, while the keyword group signal Ks comprised of a plurality of keywords is input to keyword signal input terminal 902, in FIGS.10 and 11. The keyword group signal Ks is comprised of the keywords contained in the search signal.

Customer reply section 312 performs the similar processing to that in information filtering section 310 described previously for calculating the necessity signal N and reliability signal R from the merchandise information, and calculates the reply signal.

That is, vector generating section 903 transforms the keyword group signal Ks from character sequences to the vector signal V. In transforming the character sequences to the vector signal V, a character sequence is employed of a code dictionary signal stored in code dictionary storage section 404 described previously. Positive signal calculating section 904 and negative signal calculating section 905 perform the similar processing to that in positive signal calculating section 405 and negative signal calculating section 406 in information filtering section 310, and calculate the positive signal SY and negative signal SN, respectively. Using the positive signal SY and negative signal SN, necessity calculating section 906 performs the similar processing to that in necessity calculating section 409 in information filtering section 310, and calculates the necessity signal N and reliability signal R. The calculated necessity signal N and reliability signal R are input as reply signals to a reply signal processing section in market research unit 105 described later through necessity signal output terminal 907 and reliability signal output terminal 908, respectively.

Electronic clearing unit 104 is provided with EC clearing section 314 that receives the merchandise ordering signal from merchandise information client 309 through merchandise ordering section(MOS) 313. EC clearingsection(ECS)314inquiresoffinancialinstitute or company(FIC) 315 whether the consumer as an orderer has an ability to pay for the merchandise in response to the merchandise ordering signal. When the orderer has the ability to pay, the section 314 transmits an order receiving signal to merchandise order receiving section 303 in seller terminal 101.

Market research unit 105 is comprised of market research control section(MRCS) 316, search signal generatingsection(SSGS) 317, search signal distribution section(SSDS) 318 and reply signal processing section(RSPS) 319.

Market research control section 316 controls over the entire market research unit 105. Specifically, the section 316 inquires of financial institute or company(FIC) 320 to confirm the ability on the payment of the seller using the seller ID contained in the market research ordering signal transmitted from market research ordering section 304, and judges whether to perform the market research. When the market research is performed, the section 316 transmits the market research ordering signal to search signal generating section 317 and reply signal processing section 319. Meanwhile, when the market research is not performed, the section 316 returns a message indicative of not performing the research to market research ordering section 304. Since the ability on the payment of a seller is thus confirmed, it is possible to receive an order for the market research requested from the seller provided with the ability to pay for the order.

Further, market research control section 316 transmits a market research report signal generated in reply signal processing 319 described later to market research receiving section 305. At this point, market research control section 316 withdraws the commission from an account designated by the seller ID.

Search signal generating section 317 reads out from merchandise information storage section 306 the merchandise data ID and merchandise metadata MI on the merchandise designated by the merchandise ID contained in the market research ordering signal from market research control section 316, and generates the search signal using these items of the data. The search signal contains the seller ID, merchandise ID, keywords assigned to the merchandise information and the like.

Search signal distribution section 318 distributes the search signal generated in search signal generating section 317 to customer reply section 312 in consumer terminal 103. According to the specification of the market research, search signal distribution section 318 distributes the search signal to customer reply section 312 of each of a plurality of consumer terminals 103. Further, search signal distribution section 318 reads out an address of a consumer from merchandise information server 308 when necessary to distribute the search signal.

Reply signal processing section 319 confirms the matching of the reply signal transmitted from customer reply section 312 and the merchandise information designated by the market research ordering signal previously received, and then generates the market research report signal. The generated market research report signal is transmitted to market research control section 316.

The description will be given of the operation in EC system 100 with the above configuration when a seller requests the market research. In addition, it is assumed that before the market research is performed, PPF reflective of consumer preferences is already registered with PPF storage section 311 of consumer terminal 103.

A seller desiring the market research first reads out a piece of merchandise subject to the market research from merchandise information storage section 306 through market research ordering section 304, and designates the specification of the market research on the read-out merchandise. Specifically, the seller designates a scale of the market research and market information to desire (for example, the number of consumers having an interest to a predetermined extent or more, ratio of such consumers, and favorable impression degree in the entire market). Then, the seller transmits to market research control section 316 the market research ordering signal containing these designations and the seller ID to identify the seller.

When market research control section 316 receives the market research ordering signal, the section 316 inquires of financial institute or company 320 to confirm the ability on the payment of the market research orderer designated by the seller ID. It is herein assumed that the seller has the payment ability.

Since the seller has the payment ability, market research control section 316 determines to perform the market research, and transmits the market research ordering signal to search signal generating section 317 and reply signal processing section 319.

When search signal generating section 317 receives the market research ordering signal, the section 317 reads out from merchandise information storage section 306 the merchandise information I and merchandise metadata MI corresponding to the merchandise ID contained in the market research ordering signal, and generates the search signal using these items of the data. It is herein assumed that the generated search signal contains "AAA" as the seller ID, "A00" as the merchandise ID, and "beer" and "100% malts" as keywords. The search signal is provided to search signal distribution section 318. Searchsignal distribution section 318 transmits the search signal to customer reply section 312 of consumer terminal 103.

When customer reply section 312 receives the search signal, the section 312 performs the previously-mentioned processing on the keywords contained in the search signal using vector generating section 903, positive metric calculating section 904, negative metric calculating section 905 and necessity calculating section 906, and calculates the necessity signal N and reliability signal R to transmit as the reply signal to reply signal processing section 319.

It is assumed therein that positive metric storage section 407 and negative metric storage section 408 respectively store the positive and negative scores as illustrated in FIG.7, and that determination parameter storage section 410 stores "1" as the coefficient C. Accordingly, in this case, the necessity signal N (16) and reliability signal R (26) as the reply signal are transmitted to reply signal processing section 319.

Reply signal processing signal 319 confirms the matching of the merchandise designated by the market research ordering signal previously received from market research control section 316 and the merchandise indicated by the reply signal received from customer reply section 312 in response to the market research, and then generates the market research report signal.

In addition, while the case is herein described that the reply signal is received from one customer terminal 103, in the case of receiving reply signals from a plurality of consumer terminals 103 it may be possible to calculate the statistics on these reply signals to generate the market research report signal. The market research report signal is thereby generated based on PPFs reflective of a plurality of consumer's preferences. The generated market research report signal is transmitted to market research control section 316.

Market research control section 316 transmits the market research report signal to market research receiving section 305 of seller terminal 101 of the seller who placed the order for the market research. At the same time, the section 316 withdraws the commission from an account designated by the seller ID. The series of processing for performing the market research is thus completed.

After receiving the market research report signal, the seller studies the market research report. It is thereby possible for the seller to recognize how a consumer evaluates the merchandise information assigned to the merchandise subjected to the market research.

When a consumer indicates a low evaluation on the merchandise information assigned to the merchandise subjected to the market research, improving the merchandise information assigned to the merchandise enables useful merchandise information to be presented to consumers. Distributing thus useful merchandise information motivates consumers to purchase the merchandise and thereby promotes the sales of the merchandise. As a result, the e-commerce can be expanded.

Thus according to EC system 100 of this embodiment, by comparing keywords registered with PPF reflective of consumer preferences with keywords contained in the merchandise information assigned to the merchandise on which a seller places an order for the market research, it is possible to recognize evaluations of consumers on the merchandise information assigned to the merchandise. Then, by improving the merchandise information corresponding to the evaluations of consumers, it is possible to present useful merchandise information to consumers.

In addition, in EC system 100 of this embodiment, in PPF are stored scores of a consumer corresponding to keywords contained in the merchandise information registered with merchandise information storage section 306. Further, keywords contained in the search signal are also generated from the keywords stored in merchandise information storage section 306. Therefore, it is possible for consumer terminal 103 to readily perform the processing for calculating the reply signal while reading out the scores corresponding to the keywords contained in the search signal.

Moreover, taking into account that EC system 100 of this embodiment receives and transmits over networks keywords stored in PPF indicative of consumer preferences and keywords contained in the merchandise information on which the market research a seller needs, it is preferable to encrypt these keywords. Handling encrypted keywords in EC system 100 enables consumer privacy to be protected and further enables seller confidentiality on the market research or the like to be ensured.

Further, in this embodiment is described the case where consumer terminal 103 is provided with PPF storage section 311 and based on the contents of PPF, replies to the search signal from the market research unit. However, the present invention is not limited to the above case. It may be possible that merchandise information distribution unit 102 is provided with a storage section corresponding to PPF storage section 311, and that based on the contents of PPF, merchandise information distribution unit 102 replies to the search signal from the market research unit. However, in consideration of characteristics of PPF indicative of consumer preferences, it is preferable that PPF be provided on a side of consumer terminal 103 from the standpoint of protecting the privacy.

Further, in this embodiment is described the case that a distributor manages merchandise information distribution unit 102 and market research unit 105. However, the present invention is not limited to the above case, and it may be possible that a seller manages market research unit 105. Further, it may be possible for a seller to manage both market research unit 105 and merchandise information distribution unit 102.

### (Second embodiment)

EC system 100 according to the first embodiment recognizes the evaluation of a consumer on the merchandise information assigned to the merchandise determined by a seller. In contrast thereto, EC system 200 according to the second embodiment recognizes the evaluation of a consumer on the merchandise information assigned to the merchandise that the consumer actually purchased, and in this respect differs from the system of the first embodiment.

In other words, EC system 200 according to the second embodiment recognizes the evaluation of a consumer, who actually purchased a piece of the merchandise, on the merchandise information assigned to such merchandise, and in this respect differs from EC system 100 according to the first embodiment. According to EC system 200 of the second embodiment, it is possible to recognize how the consumer who purchased the merchandise evaluated the merchandise information assigned to the merchandise before purchasing the merchandise. Then, improving the merchandise information according to the evaluation of the consumer enables useful merchandise information to be presented to consumers.

FIG.11 is a block diagram illustrating a specific configuration of EC system 200 according to the second embodiment. In FIG.11, sections assigned the same reference numerals as in FIG.4 are assumed to have the same function as in FIG.4 to omit the explanation.

EC system 200 according to the second embodiment is different from EC system 100 according to the first embodiment in a point that market research unit 105 is provided with metadata reliability survey section(MRSS) 1001.

When a consumer places an order for the merchandise, metadata reliability survey section 1001 receives the consumer ID, merchandise ID and seller ID from EC clearing section 314 to transfer to market research control section 316. Further, when the section 1001 receives a metadata reliability report signal described later from market research control section 316, the section 1001 transmits the necessity signal N and reliability signal R indicative of the evaluation of the orderer on the merchandise information assigned to the merchandise to merchandise order receiving section 303.

The description will be given of the operation in EC system 200 according to the second embodiment when a consumer purchases a piece of the merchandise. In addition, it is assumed that before a consumer purchases the merchandise, PPF reflective of the consumer preferences is already registered with PPF storage section 311 of consumer terminal 103.

When finding a desirable piece of merchandise from the merchandise information distributed from merchandise information server 308, a consumer transmits the merchandise ordering signal containing the consumer ID, merchandise ID and seller ID to EC clearing section 314 though merchandise information client 309.

When EC clearing section 314 receives the merchandise ordering signal, the section 314 inquires of finical institute or company 320 whether the consumer has the ability to pay for the merchandise. At the same time, the section 314 transmits the consumer ID, merchandise ID and seller ID contained in the merchandise ordering signal to metadata reliability survey section 1001. The section 1001 transfers the consumer ID, merchandise ID and seller ID to market research control section 316.

When market research control section 316 receives these IDs from metadata reliability survey section 1001, the section 316 transmits these IDs to search signal generating section 317 and reply signal processing section 319.

Search signal generating section 317 reads out from merchandise information storage section 306 merchandise data I and merchandise metadata MI corresponding to the merchandise ID among these IDs, and using these items of the data, generates the search signal. Then, the section 317 provides the search signal to search signal distribution section 318 along with the consumer ID. Search signal distribution section 318 transmits the search signal to customer reply section 312 of consumer terminal 103 corresponding to the received consumer ID.

Customer reply section 312 that has received the search signal performs the previously-mentioned processing on the keywords contained in the search signal using vector generating section 903, positive metric calculating section 904, negative metric calculating section 905 and necessity calculating section 906, and calculates the necessity signal N and reliability signal R. In addition, the calculation is the same as in the first embodiment and the description thereof is omitted. Customer reply section 312 adds the consumer ID to the necessity signal N and reliability signal R to generate the reply signal, and transmits the reply signal to reply signal processing section 319.

Reply signal processing signal 319 confirms the matching of the consumer ID, merchandise ID and seller ID previously received from market research control section 316 and the consumer ID and the others indicated by the reply signal received from customer reply section 312, and then generates the metadata reliability report signal. The generated metadata reliability report signal is transmitted to market research control section 316.

When the metadata reliability report signal contains the consumer ID, market research control section 316 provides the metadata reliability report signal to metadata reliability survey section 1001.

Metadata reliability survey section 1001 transmits the necessity signal N and reliability signal R indicative of the evaluation of the orderer on the merchandise information assigned to the merchandise to merchandise order receiving section 303.

After receiving the necessity signal N and reliability signal R, the seller studies the necessity signal N, etc. It is thereby possible to recognize how the consumer evaluates the merchandise information assigned to the merchandise that the consumer purchased.

For example, when the consumer indicates low evaluation on the merchandise information assigned to the merchandise that the consumer purchased, the seller is capable of recognizing that the merchandise information assigned to the merchandise did not motivate the consumer to purchase the merchandise. In this case, by improving the merchandise information assigned to the merchandise, it is possible to present the useful merchandise information to consumers.

Thus according to EC system 200 of this embodiment, by comparing with keywords assigned to the merchandise that a consumer actually purchased with keywords registered with PPF reflective of the preferences of the consumer that purchased the merchandise, it is possible to recognize the evaluation of the consumer on the merchandise information assigned to the merchandise. Then, by improving the merchandise information corresponding to the evaluation of the consumer, it is possible to present useful merchandise information to consumers.

In addition, in EC system 200 of this embodiment, in PPF are stored scores of a consumer corresponding to keywords contained in merchandise information registered with merchandise information storage section 306. Further, keywords contained in the search signal are also generated from the keywords stored in merchandise information storage section 306. Therefore, it is possible for consumer terminal 103 to readily perform the processing for calculating the reply signal while reading out the scores corresponding to the keywords contained in the search signal.

### (Third embodiment)

EC systems 100 and 200 respectively according to the first and second embodiments recognize the evaluation of a consumer on the merchandise information assigned to particular merchandise. In contrast thereto, EC system 300 according to the third embodiment recognizes all the data registered with PPF reflective of the preferences of a consumer under approval of the consumer, and in this respect differs from the above-mentioned systems.

According to EC system 300 of the third embodiment, since it is possible to recognize the merchandise information meeting consumer preferences or the merchandise information not meeting consumer preferences, it is possible to improve the merchandise information corresponding to the recognition. Further, recognizing data registered with PPFs of a plurality of users enables identification of consumers having similar preferences. Accordingly, for example, it is possible to plan such a sales strategy that sends direct mails or the like on the merchandise that one of such consumers purchased to people having similar preferences.

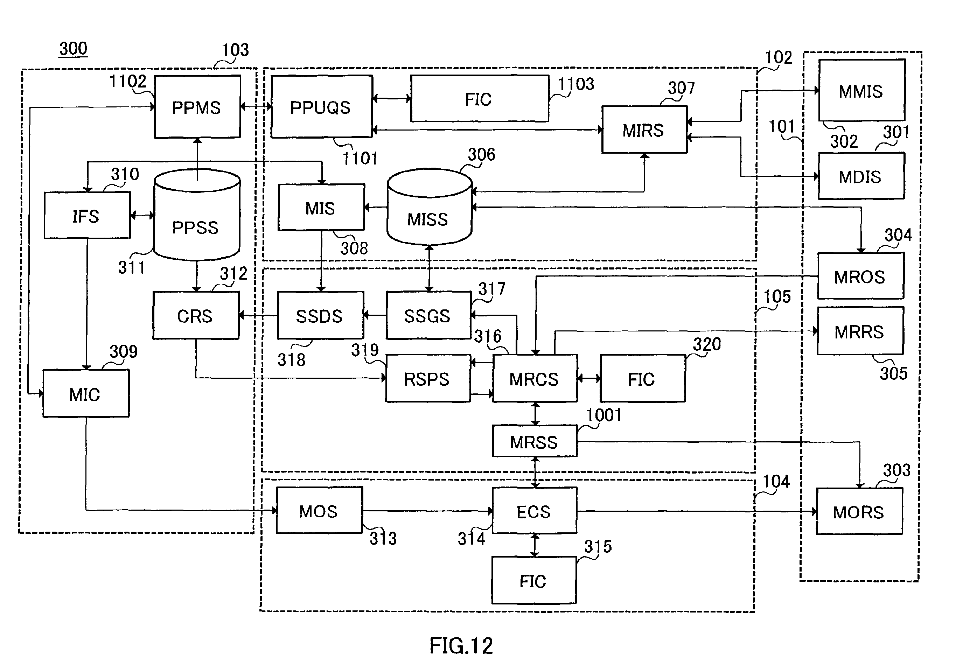

FIG.12 is a block diagram illustrating a specific configuration of EC system 300 according to the third embodiment. In FIG.12, sections assigned the same reference numerals as in FIGs.4 and 11 are assumed to have the same function as in FIGs.4 and 11 to omit the explanation.

EC system 300 according to the third embodiment is different from EC system 200 according to the second embodiment in points that merchandise information distribution unit 102 is provided with personal profile utilization querying section(PPUQS) 1101 (hereinafter referred to as "PPF utilization querying section 1101"), and that consumer terminal 103 is provided with personal profile managing section(PPMS) 1102 (hereinafter referred to as "PPF managing section 1102").

PPF utilization querying section 1101 transmits utilization conditions of PPF of a consumer designated by a seller to PPF managing section 1102 of consumer terminal 103, and thereby queries whether PPF of the consumer is available. When PPF is available and is received from consumer terminal 103, the utilization fee is paid to an account of the consumer via financial institute or company 1103 according to the presented utilization conditions and the like.

PPF managing section 1102 transfers the PPF utilization conditions received from PPF utilization querying section 1101 to merchandise information client 309, while receiving a signal indicative of whether PPF is available input from the consumer through merchandise information client 309. When the contents of the signal are indicative of allowing PPF to be used, the section 1101 reads out PPF from PPF storage section 311 to transmit to PPF querying section 1101.

The description will be given of the operation in EC system 300 according to the third embodiment when a seller desires to use PPF of a particular consumer. In addition, it is herein assumed that before a seller queries the utilization of PPF of a particular consumer, PPF reflective of the consumer preferences is already registered with PPF storage section 311 of consumer terminal 103.

The seller who desires the utilization of PPF of a particular consumer transmits to merchandise information registration section 307 through seller terminal 101 the consumer ID designating the particular consumer and utilization conditions for the case of utilizing PPF of the consumer.

The PPF utilization conditions include, for example, a period of time during which PPF is utilized and utilization fee. In addition, it is considered to designate the consumer who actually purchased the merchandise in designating a particular consumer. The PPF utilization conditions and consumer ID are input, for example, through merchandise data input section 301. Merchandise information registration section 307 transmits the PPF utilization conditions and consumer ID to PPF utilization querying section 1101.

PPF utilization querying section 1101 transmits the PPF utilization conditions provided from merchandise information registration section 307 to PPF managing section 1102 of consumer terminal 103 designated by the consumer ID. The PPF utilization conditions are transferred to merchandise information client 309 through PPF managing section 1102.

The consumer examines the utilization conditions, and transmits the signal indicative of whether the utilization of PPF is allowed to PPF managing section 1102. PPF managing section 1102 executes the processing corresponding to the signal provided from the consumer. When the consumer allows the utilization of PPF, PPF managing section 1102 reads out PPF of the consumer from PPF storage section 311 to transmit to PPF utilization querying section 1101. Meanwhile, when the consumer does not allow the utilization of PPF, PPF managing section 1102 transmits a message indicative of not allowing to PPF utilization querying section 1101. It is herein assumed that the consumer allows the utilization of PPF.

When PPF utilization querying section 1101 receives PPF from PPF managing section 1102, the section 1101 pays the utilization fee to an account of the consumer via financial institute or company 1103 according to the utilization conditions and the like presented to the consumer.

PPF transmitted from PPF managing section 1102 is transferred to the seller who desired the utilization of PPF trough PPF utilization querying section 1101. It is possible for the seller to recognize the merchandise information meeting consumer preferences or the merchandise information not meeting consumer preferences by studying PPF. Then, by improving the merchandise information corresponding to the evaluation of the consumer, it is possible to present the useful merchandise information to consumers.

In addition, while in this embodiment is described the case where a seller desires to utilize PPF of a particular consumer, the present invention is not limited to the above case. For example, the present invention may be applied to a case that a distributor that manages merchandise information distribution unit 102 utilizes PPF of a consumer. Further, it is considered that a distributor edit data of PPF acquired from a consumer, and present the edited data to a seller. This case may improve the benefit for sellers to utilize PPF.

Thus, according to EC system 300 of this embodiment, utilizing PPF of a consumer enables a seller or the like to recognize the merchandise information meeting consumer preferences or the merchandise information not meeting consumer preferences. Accordingly, it is possible for the seller or the like to improve the merchandise information corresponding to consumer preferences. It is thereby possible to present useful merchandise information to consumers.

As described above, according to the present invention, it is possible to recognize evaluations of consumers on the merchandise information assigned to the merchandise based on data registered with PPF reflective of consumer preferences. Accordingly, since it is possible to improve the merchandise information corresponding to the evaluations of consumers, it is possible to present useful merchandise information to consumers.

The present invention is not limited to the above described embodiments, and various variations and modifications may be possible without departing from the scope of the present invention.

This application is based on the Japanese Patent Application No.2000-302712 filed on October 2, 2000, entire content of which is expressly incorporated by reference herein.

## Claims

1. A market research system comprising:
a search signal generating section (317) that generates a search signal using a keyword contained in merchandise information on merchandise subject to market research requested from a seller;
a search signal distribution section (318) that distributes the search signal to a reply apparatus provided with a personal profile with which various keywords and evaluation values corresponding to the keywords are registered, the evaluation values learned in advance based on a preference of a consumer; and
a reply signal processing section (319) that receives from said reply apparatus a reply signal obtained from an evaluation value in the personal profile corresponding to the keyword contained in the search signal.

2. The market research system according to claim 1, wherein with the personal profile are registered the evaluation values corresponding to the keywords contained in the merchandise information distributed from a merchandise information server (308) that distributes the merchandise information according to a request from the consumer;
said merchandise information server (308) distributes the merchandise information from a merchandise information storage section (306) with which the merchandise information presented by the seller is registered; and
said search signal generating section (317) fetches the merchandise information on the merchandise subject to the market research from said merchandise information storage section (306) to generate the search signal.

3. The market research system according to claim 1, wherein when the market research is requested from the seller, an ability to pay for the research of the seller is confirmed.

4. The market research system according to claim 1, wherein the search signal and the reply signal are encrypted before being transmitted to respective destinations.

5. The market research system according to claim 1, further comprising:
a merchandise information reliability survey section (1001) that operates when a merchandise order containing a consumer ID, a merchandise ID and a seller ID is received, while making said search signal generating section (317) generate the search signal using the keyword contained in the merchandise information corresponding to the merchandise ID, further making said search signal distribution section (318) distribute the search signal to said reply apparatus provided with the personal profile of the consumer designated by the consumer ID, and transferring the reply signal returned in response to the search signal to the seller designated by the seller ID.

6. The market research system according to claim 1, wherein said reply apparatus provided with the personal profile is a consumer terminal (103) for the consumer to place an order for the merchandise.

7. The market research system according to claim 6, wherein said system queries the consumer whether the personal profile is available, and when the consumer allows the personal profile to be utilized, fetches the personal profile from said consumer terminal to provide to a seller that desires the personal profile.

8. The market research system according to claim 1, wherein said reply apparatus provided with the personal profile is provided in an information providing server having a function as a merchandise information server (308) that distributes the merchandise information according to a request from the consumer.

9. A merchandise information evaluation system comprising:
a search signal generating section (317) that generates a search signal using a keyword contained in merchandise information provided by a seller;
a search signal distribution section (318) that distributes the search signal to a reply apparatus provided with a personal profile with which various keywords and evaluation values corresponding to the keywords are registered, the evaluation values learned in advance based on a preference of a consumer;
a reply signal processing section (319) that receives from said reply apparatus a reply signal obtained from an evaluation value in the personal profile corresponding to the keyword contained in the search signal; and
a merchandise information reliability survey section (1001) that operates when a merchandise order containing a consumer ID, a merchandise ID and a seller ID is received, while making said search signal generating section (317) generate the search signal using the keyword contained in the merchandise information corresponding to the merchandise ID, further making said search signal distribution section (318) distribute the search signal to said reply apparatus provided with the personal profile of the consumer designated by the consumer ID, and transferring the reply signal returned in response to the search signal to the seller designated by the seller ID.

10. The market information evaluation system according to claim 9, wherein with the personal profile are registered the evaluation values corresponding to the keywords contained in the merchandise information distributed from a merchandise information server (308) that distributes the merchandise information according to a request from the consumer;
said merchandise information server (308) distributes the merchandise information from a merchandise information storage section with which the merchandise information presented by the seller is registered; and
said search signal generating section (317) fetches the merchandise information on the merchandise corresponding to the merchandise ID from said merchandise information storage section (306) to generate the search signal.

11. The merchandise information evaluation system according claim 9, wherein said reply apparatus provided with the personal profile is a consumer terminal (103) for the consumer to place an order for the merchandise.

12. The merchandises information evaluation system according to claim 11, wherein said system queries the consumer whether the personal profile is available, and when the consumer allows the personal profile to be utilized, fetches the personal profile from said consumer terminal to provide to a seller that desires the personal profile.

13. The merchandise information evaluation system according to claim 9, wherein said reply apparatus provided with the personal profile is provided in an information providing server having a function as a merchandise information server (308) that distributes the merchandise information according to a request from the consumer.

14. A consumer terminal that functions as said reply apparatus to which the search signal is distributed from said market research system according to claim 1, comprising:
a storage section (311) that stores the personal profile with which various keywords and evaluation values corresponding to the keywords are registered, the keywords contained in the merchandise information distributed from a merchandise information server that distributes the merchandise information according to a request from the consumer, the evaluation values learned in advance based on the preference of the consumer;
a search signal receiving section (312) that receives the search signal from said market research system;
a reply signal calculating section (312) that calculates the reply signal from an evaluation value in the personal profile corresponding to the keyword contained in the search signal; and
a reply signal returning section (312) that returns the reply signal to said reply signal processing section (319) in said market research system.

15. A consumer terminal that functions as said reply apparatus to which the search signal is distributed from said merchandise information evaluation system according to claim 9, comprising:
a storage section (311) that stores the personal profile with which various keywords and evaluation values corresponding to the keywords are registered, the keywords contained in the merchandise information distributed from a merchandise information server (308) that distributes the merchandise information according to a request from a consumer, the evaluation values learned in advance based on the preference of the consumer;
a search signal receiving section (312) that receives the search signal from said market research system;
a reply signal calculating section (312) that calculates the reply signal from an evaluation value in the personal profile corresponding to the keyword contained in the search signal; and
a reply signal returning section (312) that returns the reply signal to said reply signal processing section (319) in said market research system.

16. A market research system comprising:
a market research ordering section (304) that places an order for market research while designating merchandise to be researched;
a search signal generating section (317) that generates a search signal using a keyword contained in merchandise information on the merchandise subject to the market research;
a search signal distribution section (318) that distributes the search signal to a reply apparatus provided with a personal profile with which various keywords and evaluation values corresponding to the keywords are registered, the evaluation values learned in advance based on a preference of a consumer;
a reply signal processing section (319) that receives from said reply apparatus a reply signal obtained from an evaluation value in the personal profile corresponding to the keyword contained in the search signal; and
a market research receiving section (305) that receives a market research result obtained from the reply signal.

17. The market research system according to claim 16, further comprising:
a merchandise information server (308) that distributes the merchandise information from a merchandise information storage section (306) with which the merchandise information presented by a seller is registered,
wherein with the personal profile are registered the evaluation values corresponding to keywords contained in the merchandise information distributed from said merchandise information server(308), and said search signal generating section (317) fetches the merchandise information on the merchandise subject to the market research to generate the search signal.

18. A merchandise information evaluation system comprising:
a search signal generating section (317) that generates a search signal using a keyword contained in merchandise information provided by a seller;
a search signal distribution section (318) that distributes the search signal to a reply apparatus provided with a personal profile with which various keywords and evaluation values corresponding to the keywords are registered, the evaluation values learned in advance based on a preference of a consumer;
a reply signal processing section (319) that receives from said reply apparatus a reply signal obtained from an evaluation value in the personal profile corresponding to the keyword contained in the search signal;
a merchandise information reliability survey section (1001) that operates when a merchandise order containing a consumer ID, a merchandise ID and a seller ID is received, while making said search signal generating section (317) generate the search signal using the keyword contained in the merchandise information corresponding to the merchandise ID, further making said search signal distribution section (318) distribute the search signal to said reply apparatus provided with the personal profile of the consumer designated by the consumer ID, and transferring the reply signal returned in response to the search signal to the seller designated by the seller ID; and
a reply signal receiving section (303) that receives the reply signal from said merchandise information reliability survey section.

19. The merchandise information evaluation system according to claim 18, further comprising:
a merchandise information server (308) that distributes the merchandise information from a merchandise information storage section (306) with which the merchandise information presented by the seller is registered,
wherein with the personal profile are registered the evaluation values corresponding to keywords contained in the merchandise information distributed from said merchandise information server (308), and said search signal generating section (317) fetches the merchandise information on the merchandise subject to market research to generate the search signal.

20. A market research method comprising the steps of:
generating a search signal using a keyword contained in merchandise information on merchandise subject to market research requested from a seller;
distributing the search signal to a reply apparatus provided with a personal profile with which various keywords and evaluation values corresponding to the keywords are registered, the evaluation values learned in advance based on a preference of a consumer; and
receiving from said reply apparatus a reply signal obtained from an evaluation value in the personal profile corresponding to the keyword contained in the search signal.

21. The market research method according to claim 20, wherein said reply apparatus provided with the personal profile is a consumer terminal for the consumer to place an order for the merchandise.

22. The market research method according to claim 20, wherein said reply apparatus provided with the personal profile is provided in an information providing server having a function as a merchandise information server that distributes the merchandise information according to a request from the consumer.

23. A merchandise information evaluation method comprising the steps of:
receiving a merchandise order containing a consumer ID, a merchandise ID and a seller ID;
generating a search signal using a keyword contained in merchandise information corresponding to the merchandise ID;
distributing the search signal to a reply apparatus provided with a personal profile with which various keywords and evaluation values corresponding to the keywords are registered, the evaluation values learned in advance based on a preference of a consumer corresponding to the consumer ID;
receiving from said reply apparatus a reply signal obtained from an evaluation value in the personal profile corresponding to the keyword contained in the search signal; and
transferring the reply signal to a seller designated by the seller ID.

24. The merchandise information evaluation method according claim 23, wherein said reply apparatus provided with the personal profile is a consumer terminal for the consumer to place an order for the merchandise.

25. The merchandise information evaluation method according to claim 23, wherein said reply apparatus provided with the personal profile is provided in an information providing server having a function as a merchandise information server that distributes the merchandise information according to a request from the consumer.

26. An e-commerce system comprising said market research system according to claim 1.

27. An e-commerce system comprising:
said market research system according to claim 1; and
a consumer terminal (103) that functions as said reply apparatus to which the search signal is distributed from said market research system,
wherein said consumer terminal having:
a storage section (311) that stores the personal profile with which various keywords and evaluation values corresponding to the keywords are registered, the keywords contained in the merchandise information distributed from a merchandise information server that distributes the merchandise information according to a request from the consumer, the evaluation values learned in advance based on the preference of the consumer;
a search signal receiving section (312) that receives the search signal from said market research system;
a reply signal calculating section (312) that calculates the reply signal from an evaluation value in the personal profile corresponding to the keyword contained in the search signal; and
a reply signal returning section (312) that returns the reply signal to said reply signal processing section in said market research system.

28. An e-commerce system comprising said merchandise information evaluation system according to claim 9.

29. An e-commerce system comprising:
said merchandise information evaluation system according to claim 9; and
a consumer terminal (103) that functions as said reply apparatus to which the search signal is distributed from said merchandise information evaluation system,
wherein said consumer terminal (103) having:
a storage section (311) that stores the personal profile with which various keywords and evaluation values corresponding to the keywords are registered, the keywords contained in the merchandise information distributed from a merchandise information server (308) that distributes the merchandise information according to a request from a consumer, the evaluation values learned in advance based on the preference of the consumer;
a search signal receiving section (312) that receives the search signal from said merchandise information evaluation system;
a reply signal calculating section (312) that calculates the reply signal from an evaluation value in the personal profile corresponding to the keyword contained in the search signal; and
a reply signal returning section (312) that returns the reply signal to said reply signal processing section (319) in said merchandise information evaluation system.

30. An e-commerce method comprising said market research method according to claim 20.

31. An e-commerce method comprising said merchandise information evaluation method according to claim 23.
